# EUROPEAN PATENT SPECIFICATION

(11) **EP 3 166 014 B1**
(45) Date of publication and mention of the grant of the patent: **01.04.2020**
(21) Application number: 16196647.8
(22) Date of filing: 31.10.2016
(51) Int. Cl.: G06F 9/30, G06F 9/38

(54) **PROCESSORS SUPPORTING ENDIAN AGNOSTIC SIMD INSTRUCTIONS AND METHODS**
PROZESSOREN ZUR UNTERSTÜTZUNG VON ENDIAN-AGNOSTISCHER SIMD-ANWEISUNGEN UND VERFAHREN
PROCESSEURS PRENANT EN CHARGE DES INSTRUCTIONS SIMD AGNOSTIQUE « ENDIAN » ET PROCÉDÉS

(30) Priority: 03.11.2015 US 201514930740
(43) Date of publication of application: 10.05.2017
(73) Proprietor: MIPS Tech, LLC, Santa Clara, CA 95054 (US)
(72) Inventor: Rozario, Ranjit J., Santa Clara, CA California 95054 (US); Ranganathan, Sudhakar, Santa Clara, CA California 95054 (US)
(74) Representative: Slingsby Partners LLP

(56) References cited:
- WO-A2-2007/103195
- US-A1- 2004 030 856
- US-A1- 2005 125 476
- US-A1- 2011 072 170
- US-A1- 2015 248 290
- US-B1- 6 728 874

## Description

### BACKGROUND

### FIELD

In one aspect, the following disclosure relates to microprocessor microarchitecture, and in a more particular aspect, to microprocessor memory access. More particularly, apparatus, systems, and methods relate to a better way of managing data regardless of whether it is in little endian or big ending format. Specifically, the apparatus, systems, and methods provide for a single load instruction and a single load instruction regardless as to a data element size encoded in the data loaded by the single load instruction or stored by the single store instruction.

### RELATED ART

In processor architecture and implementations of processor architectures, the term "endian" refers to an ordering of data in a computer's memory. In particular, "endian" refers to a relative order of storage in memory of component elements of a multi-component data element. In many implementations, each component is a byte, and a multi-component data element is a four-byte or larger data element. There are two common types of "endian": big and little. Big endian means that the most significant part of a value being stored is stored in the lowest (smallest) memory address. Conversely, little endian means that the least significant part of a value being stored is stored in the lowest (smallest) memory address. For example, starting from an address A in a byte-addressed memory, a 4-byte value 0A0B0C0Dh (hexadecimal) in a big endian machine would store 0A at Address A, 0B at address A+1, 0C at address A+2 and 0D at address A+3. Conversely, a little endian machine would store value 0D at Address A, and so on. While both instruction and data accesses must observe an endian convention between storage and retrieval of data, the layout of instructions in memory is more likely to be compiler automated, while storage of data may be more directly controlled by a programmer, and thus observing an appropriate endian may be more of a concern with respect to data accesses. US 2004/030856 A1 discusses storing or accessing one byte at a time in dependence on the endianness of the system. US 2011/072179 A1, US 6728874 B1, US 2005/125476 A1, US 2015/248290 and WO 2007/103195 A2 deal with handling vector data in bi-endian processors using byte re-ordering during loading and storing.

Both big and little endian machines are in common use. Network byte order is big endian. Some processor architectures are only big endian and some are only little endian. Some processor architectures allow either. MIPS reduced instruction set computing (RISC) architecture is an example of such an architecture.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one aspect, this disclosure relates to a system (e.g. implemented as a processor, a processor core in a multiprocessor system, a virtualized core executing on physical processing resources, and so on) that can operate according to big endian or little endian conventions and performs load operations from memory to register and store operations from register to memory with register contents that vary based on a current endian mode of the system. Such system can support Single Instruction Multiple Data (SIMD) operations on the register, for differently sized elements, such as byte, half-word, word, and double word sized elements in a register that is 128 or more bits wide. The system loads and stores data and/or instructions without sensitivity to the size of the elements being loaded or stored, but is sensitized to endian mode (a.k.a. "endianness"). Because the register content varies based on endian mode, at least some SIMD operations are sensitized both to the endian mode and to the element size of the operation.

Such a system may be controllable through instructions determined according to an instruction set architecture (ISA). An ISA, according to some aspects of the disclosure, includes load and store instructions which can function to load data from and store data to memory for the purpose of conducting SIMD operations on the data. These load and store instructions do not have variants that are sensitized to the element size of the SIMD operation to be performed on such data. An ISA, according to some aspects of the disclosure, includes arithmetic operations that operate on different element sizes within a fixed register size (e.g., a quad-word multiplication in a 128 bit register). These instructions specify a data element size, and an execution unit that ultimately performs the instruction uses an indication of endian mode to determine where, within the source registers, particular elements to be used in the execution of that instruction are found. ISAs, according to the disclosure, also may provide instructions that search for a first appearance of a specified byte value within a register. Execution units provided to execute such instructions also are sensitized to endian mode, so that a correct search order of the register can be identified and implemented.

### BRIEF DESCRIPTION OF THE DRAWINGS

FIG. 1 depicts organization of byte-addressed memory locations;
FIG. 2 depicts a prior art example of little endian (LE) mapping of locations from memory of FIG. 1 into a register, such that a least significant byte is stored at a beginning (right-hand side) of register, and bytes of increasing significance are stored in consecutive locations; FIG. 2 also depicts different sizes of elements in arrays of bytes, half-words, words, and so on;
FIG. 3 depicts a prior art example of big endian (BE) mappings from memory to a register according to differently sized elements, such as byte, half-word, word, double-word;
FIG. 4 depicts an example of operation, for both BE and LE, for a Load instruction that can be used to load data to be used in SIMD operations, but which does not specify a size of the elements being loaded from memory into the register depicted;
FIG. 5 depicts a block diagram of a portion of a system that can implement the disclosures herein;
FIG. 6 depicts an example of SIMD processing logic that is sensitized to both the endianness of the registers being operated on and the size of the elements in the registers;
FIG. 7 depicts an example process that can be implemented by systems according to the disclosure;
FIG. 8 depicts a BE quad-word multiplication in an example implementation;
FIG. 9 depicts an LE quad-word multiplication in an example implementation;
FIGs. 10-13 depict an alternate implementation of the disclosure, in which register contents are invariant as to endianness, but processing logic is sensitized to endianness as well as element size for SIMD operations;
FIG. 14 provides an example of a search instruction that is sensitized to endianness of register contents where the register contents have been populated according to example implementations of the disclosure; and
FIGs. 15A and 15B depict example block diagrams of a processing system that can implement the disclosure, such as in the Load Store Unit and Out of Order pipelines depicted.

### DETAILED DESCRIPTION

Some processor architectures are designed to support instructions that transfer data to/from memory, or perform operations on values in registers, but do not support instructions that perform operations on data resident in memory (i.e., instructions that perform operations may have only register sources and register destinations). Load and store instructions, respectively, either load data into registers from memory or store data to memory from registers. Architectures with these type of "load/store" and "register-register" instructions are called Reduced Instruction Set Computing (RISC) architectures.

A processor may include arithmetic units that can perform Single Instruction Multiple Data (SIMD) operations on different data widths using a register of a given size. For example, registers can be 64, 128, or 256 bits wide and so on. In an example, a processor could support SIMD operations on 8, 16, 32, or 64-bit data widths in a 128-bit register. For example, a word-sized (32 bit) multiply instruction would multiply four words of data in a 128-bit register with four words of data in another 128-bit register.

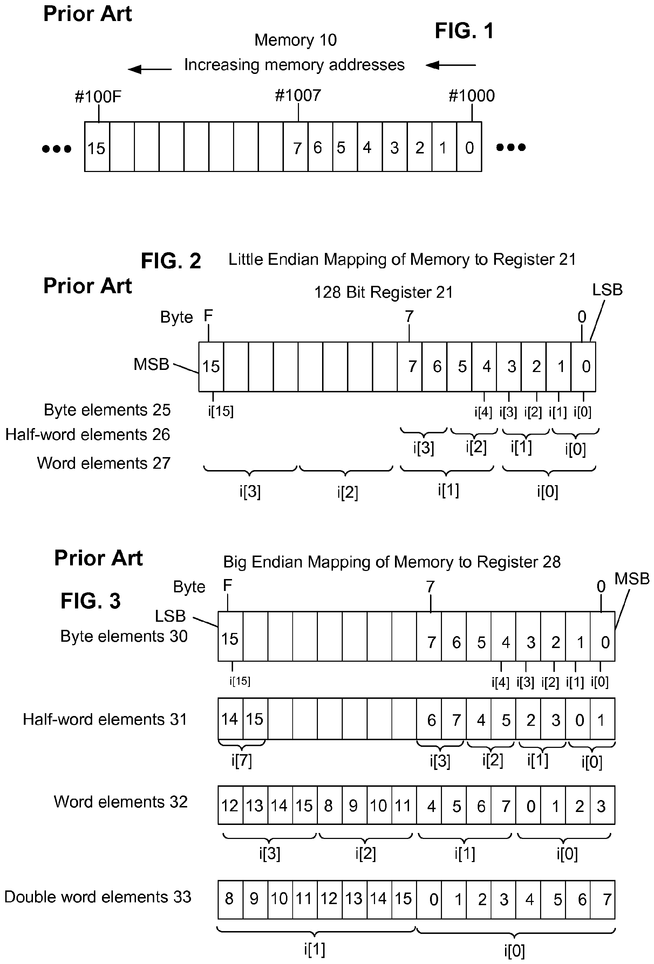

In general and as illustrated in FIGs. 2 and 3, for both little and big endian modes the prior art traditionally indexed elements in a register from low (right) to high (left) for each element (I[N]) stored in a register. For example, to load a single (i.e., non-SIMD) 128 bit data element from memory that has elements of word size in LE mode in a little endian machine, the LSB (lowest memory address) was always put in the lowest part of the first element (I[0]), and bytes of sequentially increasing addresses were placed next to each other until reaching the MSB in the element. In general, a non-SIMD 128 bit load with element of word size would place the least significant address on the right hand side of the element in LE mode and the byte at the least significant address would be placed on the left hand side of the element in BE mode.

Thus, load and store instructions in a processor that supports both big and little endian modes have additional complexity because they must be able to differentiate between big and little endian, so that the LSB and MSB of a value (whether big or little) is moved correctly between the memory and the register(s). Currently, this also applies to loads and stores that occur when performing SIMD operations. In particular, load instructions and store instructions that operate on SIMD data of different widths require different treatment between big and little endian operation. In other words, a given register width needs to have data mapped differently for different operand widths between big and little endian machines. In practice, this means that there needs to be different instructions for SIMD loads of different widths. For example, there needs to be a different instruction for load byte, a different instruction for a load word, a different instruction for a load double word, and so on. This also means that the operational code (opcode) portion of load and store instruction needs bits to specify what size of data is stored in load and store instructions. Those of ordinary skill in this art will appreciate that opcode bits in some load and store instructions are scarce, and it is desirable to use as few of opcode bits as possible.

FIG. 1 illustrates a small 16-byte portion of memory from hexadecimal address 0x1000 to address 0x100F that is loaded into a 128 bit register 21 (FIG. 2) in LE mode and into 128-bit register 28 (FIG. 3) in BE mode. As illustrated and mentioned earlier, each byte from memory is loaded from the first location in memory at address 0x1000 to the LSB of the illustrated registers 21, 28. As illustrated, byte "0" from memory address 0x1000 is loaded to the LSB location of registers 21, 28. Byte "1" from memory address 0x1001 is loaded next to it and so on until the last byte "15" is loaded in the MSB location of the registers 21, 28.

FIG. 2 shows arrangements 25-27 corresponding to LE mode for data elements that include byte data elements 25 (i[0]-i[15]), half-word data elements 26 (i[0]-i[8]), and word data elements 27 (i[0]-i[3]). FIG. 3 shows arrangements 30-33 for data elements that include byte data elements 30 (i[0]-i[15]), half-word data elements 31 (i[0]-i[8]), word data elements 32 (i[0]-i[3]), and double word sized data elements 33 (i[0]-i[2]), respectively, for BE mode.

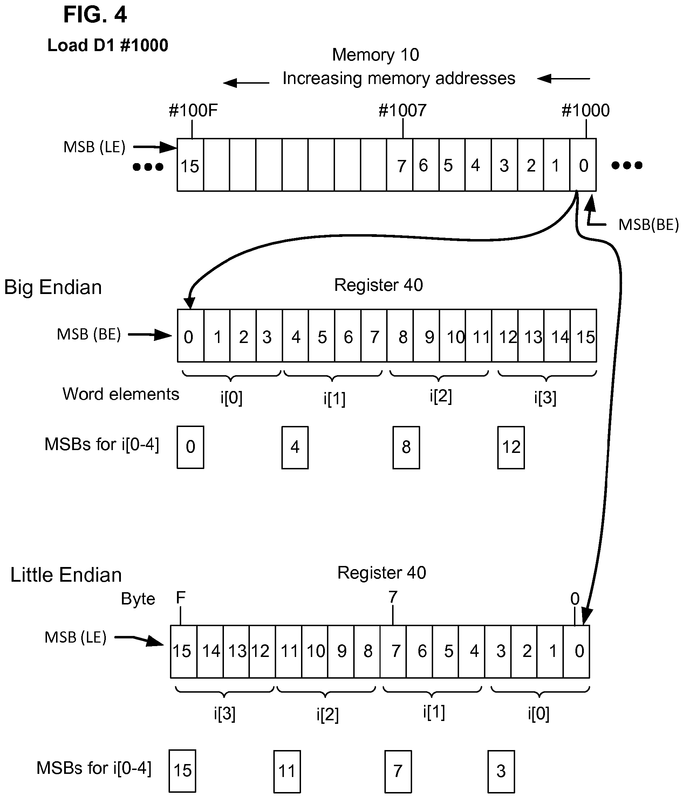

As would be apparent from comparing the contents of the registers in LE and BE mode, in BE mode the register needs to be loaded based on the element size of the operation that is intended to be performed. As such, a processor architecture that supports BE operation would need to be able to map the contents of memory into registers, as in the example. Thus, such an architecture needs to have load instructions that specify the data element size intended to be loaded when intending to perform some kind of operation on subsets of the data in the register, such as, but not exclusively, an SIMD operation. For example, a load instruction that is 128 bits in length and contains data elements of word size, each 32 bits, so that this example instruction contains four 32-bit word data elements. Thus, this example loads source data for an SIMD instruction so that the register 28 contains source data for four different commands to be executed. Thus, FIG. 4 illustrates the concept of single load/store instructions to load/write multiple instruction operands with single load/store command. Notice in FIG. 3 that the word data element of the first word i[0] contains four bytes that have been reordered into the order of byte 3 in the MSB location on the far left side, with byte 2 next to byte 3, with byte 1 next to byte 2 and with byte 0 in the LSB position. Thus, the word data elements 32 are reordered to have their MSB on the left side and their LSB on the right side. As seen, word data elements 32 do not have the same sequential ordering of bytes at they were found in memory 10; therefore, these bytes need to be aligned (e.g., swizzled) into proper position before being loaded into the register 28.

Because SIMD instructions, such as Arithmetic Logic Unit (ALU) instructions, may contain multiple data elements, an advantage to always providing the same arrangement of register contents regardless of endian mode is that register-to-register instructions do not need to be sensitized to an endian mode. In other words, given that once data is loaded into a register according to the above description, it is normalized for endianness, so instructions that operate only on registers - i.e., that only read register(s) as sources and write a result to a register (e.g., math ops), do not need to observe an endian convention that varies based on the operating mode.

As discussed next with reference to FIG. 4, a processor architecture does not need to include different instructions for big and little endian operation for register/register (e.g., ALU) operations. For example, there is no need for a different multiply instruction for a word-sized multiplication for big and little endian operations, nor is there a need for a signal input into a pipeline that indicates such operating mode.

While this presents some advantages, it may also at times present an asymmetry between how a machine behaves in BE and LE modes. This asymmetry results from the implicit requirement that the LSB (and MSB) for both big and little endian be the same. In other words, the instructions that perform register only operations (e.g., Add or MUL) view the LSB of the register as being in the same location for both BE and LE operation.

FIG. 4 depicts one aspect of the current invention in which a single load instruction can be used for loading a 40 register with data of any data element size. In other words, an ISA with a single load instruction would not need another load instruction to load a byte, load a word, and so on. In the example presented, a load/store unit (LSU) that executes the load instruction is sensitized to endian mode. However, the LSU merely takes the byte at the starting address byte 0 for the load (here effective address #1000) and either loads it as shown for BE or for LE mode. FIG. 4 shows that in BE mode, the starting address byte 0 is found at the far left of the register 40, and for LE mode, the starting address byte 0 is found at the far right. When considering the data is loaded as an array of elements of a particular size (here word-size), the location of the elements within the register 40 differ between BE and LE mode.

For example, consider that array location of word data element i[0] is found at the far left of the register 40 in BE mode and the same word data element i[0] is found at the far right of the register 40 in LE mode. In prior architectures, array location of the word data element i[0] would be loaded at the far right as in the LE mode for both BE and for LE modes. FIG. 4 also depicts the most significant bytes of the word data element i[0-4] for each of BE and LE mode. As would be appreciated in the example of FIG. 4, the MSBs for both BE and LE are at the left side of each of these word data elements i[0]. However, in LE mode, the MSB of word data element i[0] is byte 3 and in BE mode, the MSB of i[0] is byte 0.

As such, the data arranging that occurs in embodiments according to FIG. 4 is simpler than the data arranging that would be required in a standard architecture in which the same data elements of the array are located in the same positions in the register and with the same ordering for both BE and LE modes. Again, this is because prior standard architectures initially loaded elements in the same locations for both BE and LE modes as illustrated in FIGs. 2 and 3. In BE mode, byte reordering was required for data elements of size half-word and greater to be sure the MSB was at the left side of each data element. In contrast, when the single load instruction illustrated in FIG. 4 loads the register 40 in BE mode, it loads it with the MSB, byte 0, at the left end of the register 40 and so on with the LSB, byte 15, loaded at the right end. This ensures that no byte reordering is needed to ensure the MSB is at the left end of the register 40 and is also at the left end of each data element that is a half-word or larger.

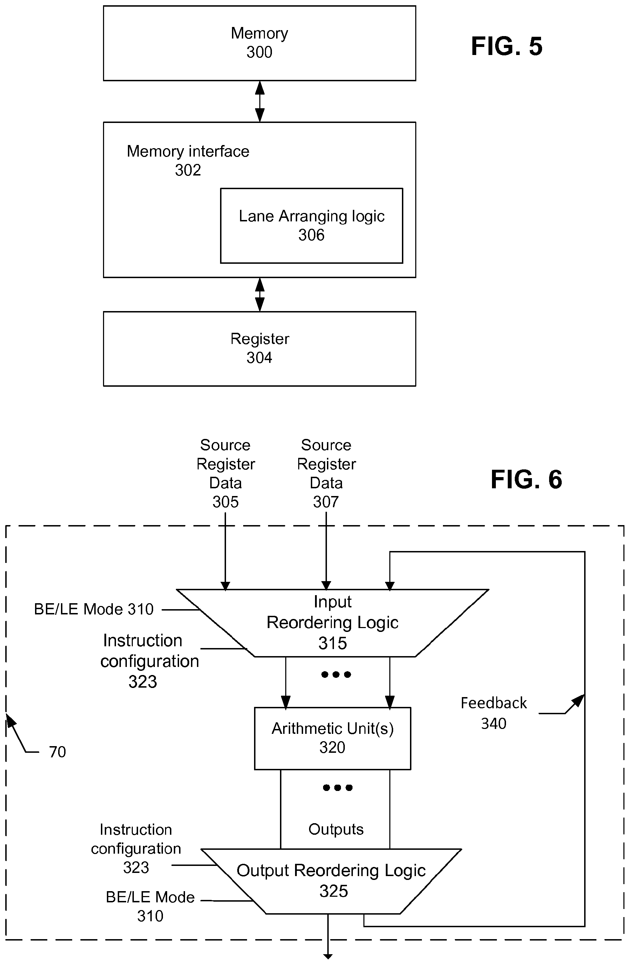

FIG. 5 depicts a memory 300, a memory interface 302 and a register 304, with the memory interface containing lane arranging logic 306. In one configuration, the memory interface 302 loads data elements of any size in response to a single load instruction as shown in the example of FIG. 4 and stores data to memory in response to a single store instruction. Such a memory interface 302 would perform an inverse operation in order to perform a store, in dependence on the endian mode, but independent of an element size of the data in the register 304. For example, when performing an LE mode load, the memory interface 302 would fetch bytes 15 to 0 from memory 10 (FIG. 4) and store them in register 304 with byte 0 at the far right side and MSB (LE) byte 15 at the far left side of the register 304. Because this is the same order of bytes as found in the memory 10, the lane arranging logic 306 does not need to reorder/change lanes of the bytes. However, when performing a BE mode load, the memory interface 302 would again fetch bytes 15 to 0 from the memory 10 (FIG. 4) and store them in register 304 with MSB (BE) byte 0 at the far left side and byte 15 at the far right side of register 321. This is because the MSB in byte ordering for BE is byte 0 and the LSB is byte 15, requiring the lane arranging logic 306 to reorder the bytes loaded from memory 10 before they are placed in the register 304.

'Processor' and 'Logic', as used herein, includes but is not limited to hardware, firmware, software and/or combinations of each to perform a function(s) or an action(s), and/or to cause a function or action from another logic, method, and/or system. For example, based on a desired application or needs, logic and/or processor may include a software-controlled microprocessor, discrete logic, an application specific integrated circuit (ASIC), a programmed logic device, a memory device containing instructions or the like. Logic and/or processor may include one or more gates, combinations of gates, or other circuit components. Logic and/or a processor may also be fully embodied as software. Where multiple logics and/or processors are described, it may be possible to incorporate the multiple logics and/or processors into one physical logic (or processor). Similarly, where a single logic and/or processor is described, it may be possible to distribute that single logic and/or processor between multiple physical logics and/or processors.

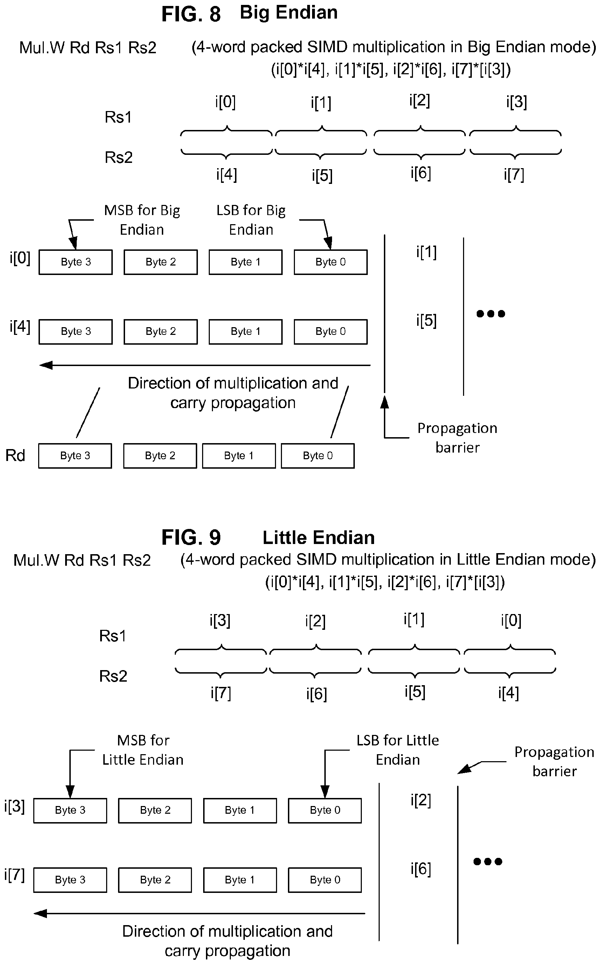

FIG. 6 depicts an example of arithmetic unit 320 that is part of an instruction execution pipeline. The arithmetic unit 320 may be an unmodified existing arithmetic unit that does not need to account for an endian mode which it is operating. This is because input reordering logic 315 and optional output reordering logic 325, when necessary, have the capability to rearrange input and output data elements so that they are properly aligned. As discussed below, multiplexers and other data bus steering logic may reorder input bytes and output bytes based on what BL/LE mode 310 the arithmetic unit(s) 320 is operating on in accordance with one or more instruction configuration inputs 323. In some configurations, instruction configuration input(s) 323 may describe an ordering of data elements such as word, double word, etc. which may depend on more than the LE/BE mode 310 and may be specified by an instruction being executed. FIGS. 8 and 9 illustrate some example orderings of inputs bytes for various example SIMD multiply instructions. Where required, the output reordering logic 325 reorders data elements or other outputs so that output data is stored in the correct locations of the destination register.

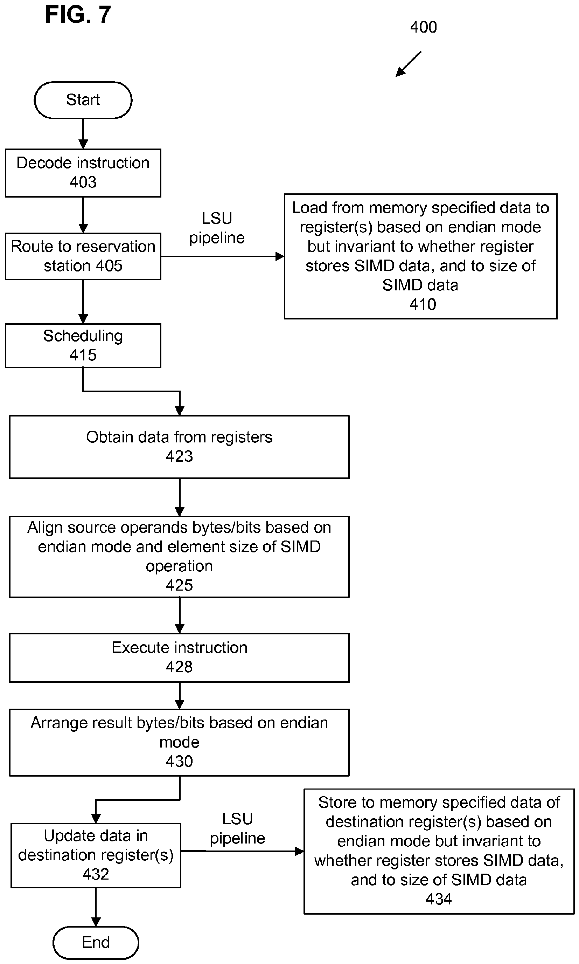

FIG. 7 illustrates an example method 400 of arranging source register bytes and resulting destination register bytes based on an endian mode in which the method 400 is operating. This example method 400 is illustrated with reference to flow a diagram. While for purposes of simplicity of explanation, the illustrated methodology are shown and described as a series of blocks, it is to be appreciated that the methodology is not limited by the order of the blocks, as some blocks can occur in different orders and/or concurrently with other blocks from that shown and described. Moreover, less than all the illustrated blocks may be required to implement the example methodology. Blocks may be combined or separated into multiple components. Furthermore, additional and/or alternative methodologies can employ additional, not illustrated, blocks.

The example method 400 begins at 403 by decoding a prior fetched instruction to determine its source and destination operands and what type of instruction is to be executed. Next, the decoded instruction is routed to a reservation station at 405. As discussed later, a reservation station provides a way for an out-of-order pipeline to write speculative intermediate results of the execution of an instruction before fully retiring an instruction in programming order. When the instruction requires a load from memory, a load is performed in the load store unit (LSU) pipeline, at 410, that loads one or more registers from memory. This load is performed based, at least in part on the endian mode (BE or LE). However, the load is invariant as to whether a register is loaded with SIMD or the data element size of the SIMD data. For example, based on endian mode, the register may be loaded as illustrated in FIG. 4 and a single load instruction may be used to load a register with any data element size.

After being associated with an entry in the reservation station, the instruction is scheduled for execution at 415. As the instruction is prepared for execution, source operands associated with the instruction are obtained from corresponding registers at 423. When required, the source operand bytes/bits are aligned at 425 based, at least in part, on the endian mode as well as the data element size (byte, half-word, word, double-word) of the SIMD operation of the instruction. The instruction is executed/performed at 428 and when required the resulting byte/bits are aligned based, at least in part, on the ending mode at 430. The destination register(s) and, if needed, the reservation station are updated with the execution results at 432. When a store is needed to write results to memory, the method 400 at 434 sends data to be stored to the LSU pipeline so that the results are stored to memory based on endian mode but invariant to whether register stores SIMD data, and invariant to the size of SIMD data being stored.

FIG. 8 depicts an example of a quad-word multiply in BE mode. In this example, source register Rs1 is being multiplied with source register Rs2 in BE mode. FIG. 9 depicts a similar multiplication in LE mode. In both of these examples, data element word i[0] is being multiplied with i[4], i[1] with [5] and so on. In these examples, words of a SIMD instruction are being multiplied but in other examples, bytes, half-words, double-words or other data element sizes of SIMD data may be similarly multiplied. FIGs. 8 and 9 illustrate that because these data element words are located in respectively different locations, different pairs of data elements may be multiplied together at different times if fewer than four ALUs are available. If four or more ALUs are available to execute this SIMD with four words, then the four multiplications may be performed in parallel. In general, if one ALU is available, then in BE mode, words i[0] and i[4] are first multiplied together, then words i[1] and i[5] are multiplied together, next i[2] and i[6], and then i[3] and i[7] are multiplied together as the SIMD instruction flows through the ALU pipeline. In LE mode, words i[3] and i[7] are first multiplied together, then words i[2] and i[6] are multiplied together, next i[1] and i[5], and then i[0] and i[4] are multiplied together. For a few other instructions, the ALU/execution unit also requires an input for the word/element size in order to determine when to determine how to align some input data and some output data. As illustrated, the propagation barriers between pipeline stages for the multiplication of words terminate the carry propagation after two words have been multiplied. Within each multiplication of each word data element, the bytes have the same ordering so that there, in these two examples, is no need to do a byte-by-byte remapping.

Referring back to FIG. 4, when an execution unit performs a search of the register 40 of FIG. 4 for a particular data element value, it starts at the element at the left end of the register and proceeds to the element at the right end in BE mode and it starts at the element at the right end of the register and proceeds to the element at the left end in LE mode. This is because for both LE and BE modes, the byte at the lowest address is always loaded at the right end and the byte at the highest address is always loaded at the left end of the registers but the allocation of each of the bytes in the registers to elements changes. A search instruction, by definition, starts at the least significant element of a register and searches element-by-element for a particular value until it reaches the most significant element. In LE mode, the first element is at the right end of the register and in BE mode, the first element is at the left end of the register. If the search value is not found in the register, the search instruction may return a signal that indicates no match was found.

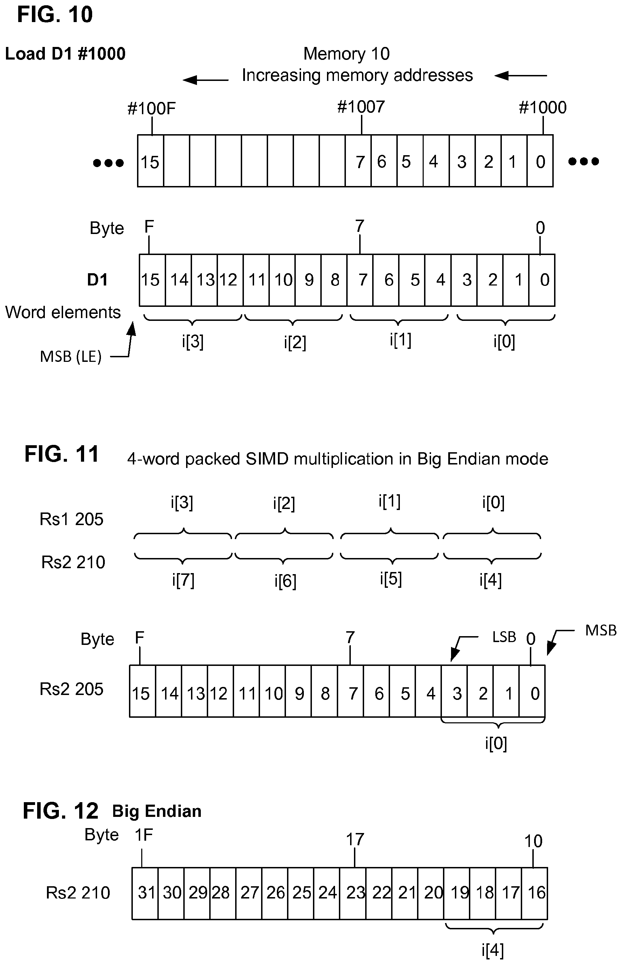

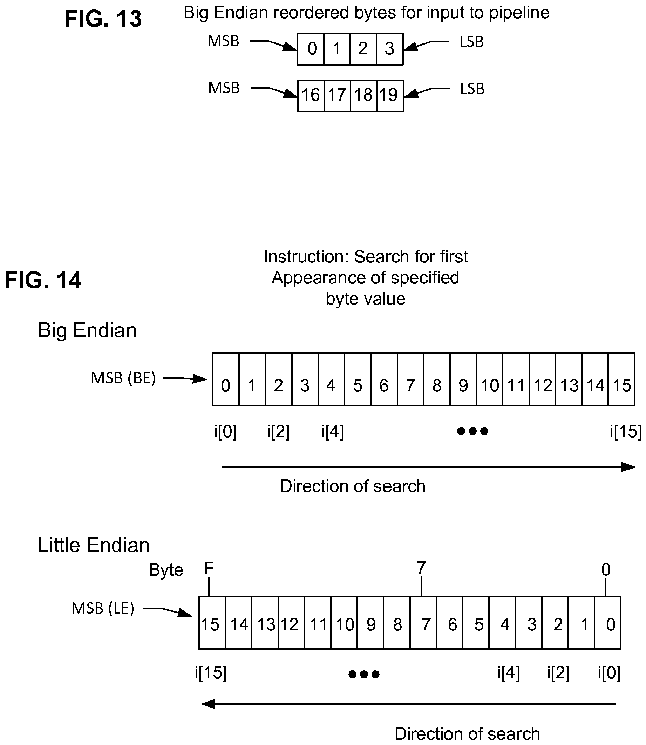

Unlike the load instruction example of Fig. 4, FIGs. 10-13 depict a different example of a single load instruction that can be used to load a register with any size of data elements. In some ways, this load instruction is similar to a classical load instruction. However, the load instruction of FIGs. 10-13 does not account for possible sizes of data elements at the time of load. In FIG. 10, when a load instruction (Load D1 #1000) is executed, the same relative arrangement of the array members is maintained between both BE and LE modes (e.g., i[0] would be in the same location, regardless whether the load was in BE or LE mode). As illustrated in FIG. 10, register D1 is loaded with word data element i[0] containing bytes 3-0, word data element i[1] containing bytes 7-4, word data element i[2] containing bytes 11-8, and word data element i[3] containing bytes 15-12. However, in this configuration, and as illustrated in FIGs. 11 and 13, when implementing the BE mode, the data within each element in the register needs to be reordered before use, as exemplified in FIG. 13 for i[0] and i[4].

Similar to FIG. 8, FIGs. 11 and 12 illustrate a 4-word packed SMID multiplication of source register one (Rs1) 205 and source register two (Rs2) 210 in BE mode. As illustrated in FIG. 11, Rs1 205 has been loaded with data element words (e.g., elements) i[3], i[2], i[1], i[0] and Rs1 205 has been loaded with data element words i[7], i[6], i[5], i[4]. The corresponding byte positions of Rs2 210 are illustrated in FIG. 12. This instruction multiplies word i[3] with word i[7], word i[2] with word i[6], word i[1] with word i[5], and word i[0] with word i[4]. In LE mode, the byes of each word are properly aligned. However, in BE mode, the bytes of each word must be realigned as illustrated in FIG. 13 for words i[0] and i[4]. This realignment, or swizzeling, may be performed with lane arranging/alignment logic similar to lane arranging logic 306 discussed above with reference to FIG. 5 or with logic similar to the input reordering logic 315 of FIG. 6. Those of ordinary skill in the art will appreciate that this alignment logic may be implemented similarly to alignment logic implemented in graphics processing units (GPUs).

FIG. 14 depicts an example of a search instruction that identifies a first appearance of an element (e.g., byte) value while searching elements (e.g., bytes) having smaller address values to elements having larger address values. In implementations of the disclosure, these search instructions are executed by an execution unit that is sensitized according to endian mode. In particular, the ordering logic is reversed between BE and LE mode, as shown in FIG. 14. As illustrated, in BE mode, a search of a register starts at the left side of the register and proceeds element-to-element toward the rights side of the register until an element is found in the register that matches the search value or the entire register has been searched. In some configurations, if no match is found, the execution unit will generate an indication there was no matching element in that register. In LE mode, the search is reversed and the search of the register begins at the right side and proceeds element-to-element toward the left side of the register until an element is found in the register that matches the search value or the entire register has been searched.

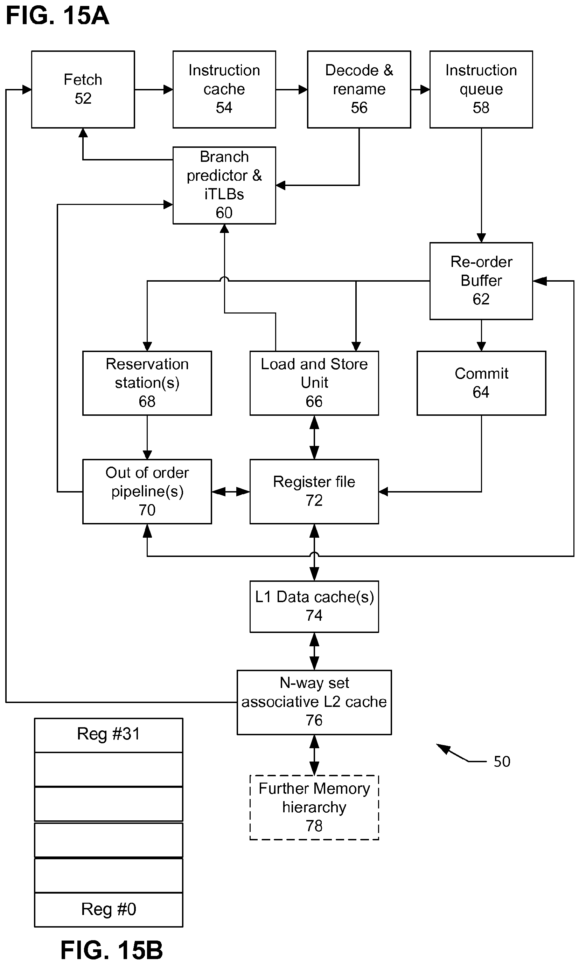

FIGs. 15A and 15B present an example block diagram of a processor 50 that can implement the disclosure. In particular, the load store unit (LSU) 66 can execute load and store instructions in accordance with the disclosure to perform the mapping described between memory and register for each mode. Instruction execution pipelines 70 (can be in or out of order) are provided an endian mode signal that indicates operating mode. The endian mode signal also can be a register bit that is set to indicate the endian mode.

The fetch logic 52 pre-fetches software instructions from memory that the processor 50 will execute. These pre-fetched instructions are placed in an instruction cache 54. These instructions are later removed from the instruction cache 54 by the decode and rename logic 56 and decoded into instructions that the processor can process. These instructions are also renamed and placed in the instruction queue 58. The decoder and rename logic 56 also provides information associated with branch instructions to the branch predictor and Instruction Translation Lookaside Buffers (ITLBs) 60. The branch predictor and ILTBs 60 predict branches and provides this branch prediction information to the fetch logic 52 so instructions of predicted branches are fetched.

A re-order buffer 62 stores results of speculatively completed instructions that may not be ready to retire in programing order. The re-order buffer 62 may also be used to unroll miss-predicted branches. The reservation station(s) 68 provides a location for instructions to write their results to without requiring a register to become available. The reservation station(s) 68 also provide for register renaming and dynamic instruction rescheduling. The commit unit 60 determines when instruction data values are ready to be committed/loaded into one or more registers in the register file 72. The load and store unit 66 monitors load and store instructions to and from memory to be sure this memory data follows sequential program order, even though the processor 50 is speculatively executing instructions out of order. For example, the load and store unit will not allow a load to load data from a memory location that a pending older store instruction has not yet written.

Instructions are executed in one or more out-of-order pipeline(s) 70 that are not required to execute instructions in programming order. In general, instructions eventually write their results to the register file 72. FIG. 15B illustrates an example register file with 32 registers Reg #0 through Reg #31. Depending on the instruction, data results from the register file 72 may eventually be written into one or more level one (LI) data cache(s) 74 and an N-way set associative level two (L2) cache 76 before reaching a memory hierarchy 78.

Processors according to the above disclosure can enjoy the following benefits (although such benefits are not necessarily present in all implementations): in some processor architectures, both load and store instructions require significantly more opcode space to express than register-to-register instructions. For example, a load with a source, destination, and a 16 bit offset would typically require five bits to identify 1 of 32 source registers as well as five bits to identify 1 of 32 destination registers and 16 address offset bits for a total of 26 bits of opcode space leaving the last six bits of the 32 bit opcode free to identify an instruction as a load. Alternatively, a register-to-register instruction without an offset would need 15 bits to specify three registers leaving more opcode bits available to identify the type of load instruction. In another configuration, an architecture may have 32 registers with each register identified with five bits, and may have an opcode of six bits. Such an architecture would use only 21 bits for encoding such a register-to-register operation. While a RISC architecture may still store that instruction in 32 bits, using only 21 bits of the space allows many more instructions to be encoded. Alternatively, more registers can be addressed, or some combination thereof. Further, the lane arranging logic 306 in the memory interface 302 (FIG. 5) can be simpler than in prior systems, in that it does not need to perform a byte-specific reordering. While processing units may need to be sensitized to endian mode, there typically already would be sufficient lane reordering logic to support varied logical or arithmetic operations on specified lanes of different sizes. This logic can be supplemented to take endian mode into account.

The term 'processor' further includes any of a variety of machine structures that can process or handle data, including, for example, a Digital Signal Processor, fixed function circuitry, input/output (I/O), or even functional units within processor. Still further, 'processor' includes virtualized execution resources, such that one set of physical execution resources can be abstracted as multiple physical processors. An operative distinction is whether support for prefetching data into relatively local storage, from relatively remote storage is provided, and subsidiary distinction that may call for implementing the disclosure are the capability of reordering of demand requests, from out of order processing, multithreading, or both.

Modern general purpose processors regularly require in excess of two billion transistors to be implemented, while graphics processing units may have in excess of five billion transistors. Such transistor counts are likely to increase. Such processors have used these transistors to implement increasing complex operation reordering, prediction, more parallelism, larger memories (including more and bigger caches) and so on. As such, it becomes necessary to be able to describe or discuss technical subject matter concerning such processors, whether general purpose or application specific, at a level of detail appropriate to the technology being addressed. In general, a hierarchy of concepts is applied to allow those of ordinary skill to focus on details of the matter being addressed.

For example, high level features, such as what instructions a processor supports conveys architectural-level detail. When describing high-level technology, such as a programming model, such a level of abstraction is appropriate. Microarchitecture detail describes high level detail concerning an implementation of architecture (even as the same microarchitecture may be able to execute different ISAs). Yet, microarchitecture detail typically describes different functional units and their interrelationship, such as how and when data moves among these different functional units. As such, referencing these units by their functionality is also an appropriate level of abstraction, rather than addressing implementations of these functional units, since each of these functional units may themselves comprise hundreds of thousands or millions of gates. When addressing some particular feature of these functional units, it may be appropriate to identify substituent functions of these units, and abstract those, while addressing in more detail the relevant part of that functional unit.

Eventually, a precise logical arrangement of the gates and interconnect (a netlist) implementing these functional units (in the context of the entire processor) can be specified. However, how such logical arrangement is physically realized in a particular chip (how that logic and interconnect is laid out in a particular design) still may differ in different process technology and for a variety of other reasons. Many of the details concerning producing netlists for functional units as well as actual layout are determined using design automation, proceeding from a high level logical description of the logic to be implemented (e.g., a "hardware description language").

The term "circuitry" does not imply a single electrically connected set of circuits. Circuitry may be fixed function, configurable, or programmable. In general, circuitry implementing a functional unit is more likely to be configurable, or may be more configurable, than circuitry implementing a specific portion of a functional unit. For example, an Arithmetic Logic Unit (ALU) of a processor may reuse the same portion of circuitry differently when performing different arithmetic or logic operations. As such, that portion of circuitry is effectively circuitry or part of circuitry for each different operation, when configured to perform or otherwise interconnected to perform each different operation. Such configuration may come from or be based on instructions, or microcode, for example.

In all these cases, describing portions of a processor in terms of its functionality conveys structure to a person of ordinary skill in the art. In the context of this disclosure, the term "unit" refers, in some implementations, to a class or group of circuitry that implements the functions or functions attributed to that unit. Such circuitry may implement additional functions, and so identification of circuitry performing one function does not mean that the same circuitry, or a portion thereof, cannot also perform other functions. In some circumstances, the functional unit may be identified, and then functional description of circuitry that performs a certain feature differently, or implements a new feature, may be described. For example, a "decode unit" refers to circuitry implementing decoding of processor instructions. The description explicates that in some aspects, such decode unit, and hence circuitry implementing such decode unit, supports decoding of specified instruction types. Decoding of instructions differs across different architectures and microarchitectures, and the term makes no exclusion thereof, except for the explicit requirements of the claims. For example, different microarchitectures may implement instruction decoding and instruction scheduling somewhat differently, in accordance with design goals of that implementation. Similarly, there are situations in which structures have taken their names from the functions that they perform. For example, a "decoder" of program instructions, that behaves in a prescribed manner, describes structure supports that behavior. In some cases, the structure may have permanent physical differences or adaptations from decoders that do not support such behavior. However, such structure also may be produced by a temporary adaptation or configuration, such as one caused under program control, microcode, or other source of configuration.

Different approaches to design of circuitry exist. For example, circuitry may be synchronous or asynchronous with respect to a clock. Circuitry may be designed to be static or be dynamic. Different circuit design philosophies may be used to implement different functional units or parts thereof. Absent some context-specific basis, "circuitry" encompasses all such design approaches.

Although circuitry or functional units described herein may be most frequently implemented by electrical circuitry, and more particularly, by circuitry that primarily relies on a transistor implemented in a semiconductor as a primary switch element, this term is to be understood in relation to the technology being disclosed. For example, different physical processes may be used in circuitry implementing aspects of the disclosure, such as optical, nanotubes, micro-electrical mechanical elements, quantum switches or memory storage, magneto resistive logic elements, and so on. Although a choice of technology used to construct circuitry or functional units according to the technology may change over time, this choice is an implementation decision to be made in accordance with the then-current state of technology. This is exemplified by the transitions from using vacuum tubes as switching elements to using circuits with discrete transistors, to using integrated circuits, and advances in memory technologies, in that while there were many inventions in each of these areas, these inventions did not necessarily fundamentally change how computers fundamentally worked. For example, the use of stored programs having a sequence of instructions selected from an instruction set architecture was an important change from a computer that required physical rewiring to change the program, but subsequently, many advances were made to various functional units within such a stored-program computer.

Functional modules may be composed of circuitry, where such circuitry may be a fixed function, configurable under program control or under other configuration information, or some combination thereof. Functional modules themselves thus may be described by the functions that they perform, to helpfully abstract how some of the constituent portions of such functions may be implemented.

In some situations, circuitry and functional modules may be described partially in functional terms, and partially in structural terms. In some situations, the structural portion of such a description may be described in terms of a configuration applied to circuitry or to functional modules, or both.

Although some subject matter may have been described in language specific to examples of structural features and/or method steps, it is to be understood that the subject matter defined in the appended claims is not necessarily limited to these described features or acts. For example, a given structural feature may be subsumed within another structural element, or such feature may be split among or distributed to distinct components. Similarly, an example portion of a process may be achieved as a by-product or concurrently with performance of another act or process, or may be performed as multiple, separate acts in some implementations. As such, implementations according to this disclosure are not limited to those that have a 1:1 correspondence to the examples depicted and/or described.

Above, various examples of computing hardware and/or software programming were explained, as well as examples of how such hardware/software can intercommunicate. These examples of hardware or hardware configured with software and such communication interfaces provide means for accomplishing the functions attributed to each of them. For example, a means for performing implementations of software processes described herein includes machine-executable code used to configure a machine to perform such process. Some aspects of the disclosure pertain to processes carried out by limited configurability or fixed function circuits and in such situations, means for performing such processes include one or more of special purpose and limited-programmability hardware. Such hardware can be controlled or invoked by software executing on a general purpose computer.

Implementations of the disclosure may be provided for use in embedded systems, such as televisions, appliances, vehicles, or personal computers, desktop computers, laptop computers, message processors, hand-held devices, multi-processor systems, microprocessor-based or programmable consumer electronics, game consoles, network PCs, minicomputers, mainframe computers, mobile telephones, PDAs, tablets and the like.

In addition to hardware embodiments (e.g., within or coupled to a Central Processing Unit ("CPU"), microprocessor, microcontroller, digital signal processor, processor core, System on Chip ("SOC"), or any other programmable or electronic device), implementations may also be embodied in software (e.g., computer readable code, program code, instructions and/or data disposed in any form, such as source, object or machine language) disposed, for example, in a computer usable (e.g., readable) medium configured to store the software. Such software can enable, for example, the function, fabrication, modeling, simulation, description, and/or testing of the apparatus and methods described herein. For example, this can be accomplished through the use of general programming languages (e.g., C, C++), GDSII databases, hardware description languages (HDL) including Verilog HDL, VHDL, SystemC Register Transfer Level (RTL), and so on, or other available programs, databases, and/or circuit (i.e., schematic) capture tools. Embodiments can be disposed in computer usable medium including non-transitory memories such as memories using semiconductor, magnetic disk, optical disk, ferrous, resistive memory, and so on.

As specific examples, it is understood that implementations of disclosed apparatuses and methods may be implemented in a semiconductor intellectual property core, such as a microprocessor core, or a portion thereof, embodied in a Hardware Description Language (HDL), that can be used to produce a specific integrated circuit implementation. A computer readable medium may embody or store such description language data, and thus constitute an article of manufacture. A non-transitory machine readable medium is an example of computer-readable media. Examples of other embodiments include computer readable media storing Register Transfer Language (RTL) description that may be adapted for use in a specific architecture or microarchitecture implementation. Additionally, the apparatus and methods described herein may be embodied as a combination of hardware and software that configures or programs hardware.

Also, in some cases, terminology has been used herein because it is considered to more reasonably convey salient points to a person of ordinary skill, but such terminology should not be considered to imply a limit as to a range of implementations encompassed by disclosed examples and other aspects. A number of examples have been illustrated and described in the preceding disclosure. By necessity, not every example can illustrate every aspect, and the examples do not illustrate exclusive compositions of such aspects. Instead, aspects illustrated and described with respect to one figure or example can be used or combined with aspects illustrated and described with respect to other figures. As such, a person of ordinary skill would understand from these disclosures that the above disclosure is not limiting as to constituency of embodiments according to the claims, and rather the scope of the claims define the breadth and scope of inventive embodiments herein. The summary and abstract sections may set forth one or more but not all exemplary embodiments and aspects of the invention within the scope of the claims.

## Claims

1. A processor system (50) comprising:
a register (205); and **characterized by**:
a load store unit (LSU, 66) configured to execute a load instruction to load data into the register from a memory (10), wherein when in little endian mode bytes from sequentially increasing memory addresses are loaded in order of corresponding sequentially increasing byte memory addresses from a first end of the register to a second end of the register, and wherein when in big endian mode bytes from sequentially increasing memory addresses are loaded in order of corresponding sequentially increasing memory addresses from the second end of the register to the first end of the register.

2. The processor system of claim 1 wherein bytes are stored within the register as data elements, wherein the size of the data elements is one of: byte, half-word, word, double-word, and quad-word.

3. The processor system of claim 1 or 2 wherein the register is a first source register and bytes are stored within the first source register as data elements and further comprising:
an arithmetic local unit (ALU, 320) configured to execute an ALU instruction using data from the first source register and a second source register (220), wherein when performing one or more operations from the group of: addition, subtraction, and multiplication, bits within individual data elements that are input to the ALU from the first source register and the second source register are not reordered regardless of whether the system is operating in big endian mode or little endian mode.

4. The processor system of claim 3 wherein the ALU instruction is a single instruction multiple data (SIMD) instruction.

5. The processor system of claim 3 or 4 further comprising:
input reordering logic configured to rearrange an order of bytes from the first source register before data from the first source register is input to the ALU based, at least in part, whether the processor system is operating in big or little endian mode.

6. The processor system of claim 4 or claim 5 as dependent on claim 4, wherein the SIMD instruction operates on four data element word pairs, wherein the data element word pairs are corresponding data element words from the first and second source registers.

7. The processor system of claim 6 wherein the data element pairs are processed in parallel in multiple ALUs.

8. The processor system of any of claims 2 to 7 wherein the load instruction comprises a single load instruction configured to cause the LSU to load data with data elements from memory to the register without regard to a size of the data elements.

9. The processor system of any of claims 3 to 7 further comprising:
output reordering logic configured to align bytes of an output value calculated by the ALU based, at least in part, on whether the processor system is operating in big endian mode or little endian mode.

10. The processor system of any preceding claim wherein the LSU is further configured to return bytes stored in the register to original memory byte addresses from which the bytes stored in the register were loaded.

11. The processor system of any preceding claim further comprising:
search logic configured to search in little endian mode for a byte value starting at the first end of the register and searching byte by byte for the byte value until reaching the second end of the register, and wherein the search logic is configured to search in big endian mode for a byte value starting at the second end of the register and searching byte by byte for the byte value until reaching the first end of the register.

12. A method for use at a processor system (50), the method **characterized by** receiving, at a load store unit (LSU, 66), a single load instruction which causes the LSU to load data into a first source register (205), wherein the data is stored as data elements, from a memory, wherein when the processor is in little endian mode bytes from sequentially increasing memory addresses are loaded in order of corresponding sequentially increasing byte memory addresses from a first end of the first source register to a second end of the first source register, and wherein when the processor is in big endian mode bytes from sequentially increasing memory addresses are loaded in order of corresponding sequentially increasing memory addresses from the second end of the first source register to the first end of the first source register.

13. A method as claimed in claim 12, wherein bytes are stored within the register as data elements, wherein the size of the data elements is one of: byte, half-word, word, double-word, and quad-word.

14. A method as claimed in claim 13, wherein the register is a first source register, the method further comprising:
executing, at an arithmetic logic unit (ALU, 320), an ALU instruction using data from the first source register and a second source register, wherein when performing one or more operations from the group of: addition, subtraction, and multiplication bits within individual data elements that are input to the ALU from the first source register and the second source register are not reordered regardless of whether the processor is operating in big endian mode or little endian mode.

15. A method as claimed in claim 14, the method further comprising:
rearranging an order of bits from the first source register before data from the first source register is input to the ALU based, at least in part, on whether the processor is operating in big endian mode or little endian mode.

## Patentansprüche

1. Prozessorsystem (50), umfassend:
ein Register (205); und **gekennzeichnet durch**:
eine Lade-/Speichereinheit (LSU, 66), die konfiguriert ist, eine Ladeanweisung auszuführen, um Daten aus einem Speicher (10) in das Register zu laden, wobei im Little-Endian-Modus Bytes aus sequenziell zunehmenden Speicheradressen in der Reihenfolge entsprechender, von einem ersten Ende des Registers zu einem zweiten Ende des Registers sequenziell zunehmender Byte-Speicheradressen geladen werden, und wobei im Big-Endian-Modus Bytes aus sequenziell zunehmenden Speicheradressen in der Reihenfolge entsprechender, von dem zweiten Ende des Registers zu dem ersten Ende des Registers sequenziell zunehmender erster Speicheradressen geladen werden.

2. Prozessorsystem nach Anspruch 1, wobei Bytes in dem Register als Datenelemente gespeichert sind, wobei die Größe der Datenelemente eine der Folgenden ist: Byte, Halbwort, Wort, Doppelwort und Quadwort.

3. Prozessorsystem nach Anspruch 1 oder 2, wobei das Register ein erstes Quellenregister ist und Bytes in dem ersten Quellenregister als Datenelemente gespeichert sind, und ferner umfassend:
eine arithmetisch-logische Einheit (ALU, 320), die konfiguriert ist, eine ALU-Anweisung unter Verwendung von Daten aus dem ersten Quellenregister und einem zweiten Quellenregister (220) auszuführen, wobei bei Durchführung einer oder mehrerer Operationen aus der Gruppe: Addition, Subtraktion und Multiplikation Bits innerhalb einzelner Datenelemente, die aus dem ersten Quellenregister und dem zweiten Quellenregister in die ALU eingegeben werden, nicht umgeordnet werden, unabhängig davon, ob das System im Big-Endian-Modus oder im Little-Endian-Modus arbeitet.

4. Prozessorsystem nach Anspruch 3, wobei die ALU-Anweisung eine Single-Instruction-Multiple-Data(SIMD)-Anweisung ist.

5. Prozessorsystem nach Anspruch 3 oder 4, ferner umfassend:
Eingabe-Umordnungslogik, die konfiguriert ist, eine Ordnung von Bytes aus dem ersten Quellenregister neu anzuordnen, bevor Daten aus dem ersten Quellenregister zumindest teilweise basierend darauf, ob das Prozessorsystem im Big- oder Little-Endian-Modus arbeitet, in die ALU eingegeben werden.

6. Prozessorsystem nach Anspruch 4 oder Anspruch 5 in Abhängigkeit von Anspruch 4, wobei die SIMD-Anweisung mit vier Datenelementwortpaaren arbeitet, wobei die Datenelementwortpaare entsprechende Datenelementwörter aus dem ersten und dem zweiten Quellenregister sind.

7. Prozessorsystem nach Anspruch 6, wobei die Datenelementpaare parallel in mehreren ALUs verarbeitet werden.

8. Prozessorsystem nach einem der Ansprüche 2 bis 7, wobei die Ladeanweisung eine einzelne Ladeanweisung umfasst, die dafür ausgelegt ist, die LSU zu veranlassen, Daten mit Datenelementen aus dem Speicher, ohne Berücksichtigung einer Größe der Datenelemente, in das Register zu laden.

9. Prozessorsystem nach einem der Ansprüche 3 bis 7, ferner umfassend:
Ausgabe-Umordnungslogik, die konfiguriert ist, Bytes eines durch die ALU berechneten Ausgabewertes zumindest teilweise basierend darauf, ob das Prozessorsystem im Big-Endian-Modus oder im Little-Endian-Modus arbeitet, auszurichten.

10. Prozessorsystem nach einem der vorhergehenden Ansprüche, wobei die LSU ferner konfiguriert ist, Bytes, die in dem Register gespeichert sind, auf ursprüngliche Speicher-Byte-Adressen, aus denen die in dem Register gespeicherten Bytes, die in dem Register gespeichert sind, geladen wurden, zurückzubringen.

11. Prozessorsystem nach einem der vorhergehenden Ansprüche, ferner umfassend:
Suchlogik, die konfiguriert ist, im Little-Endian-Modus beginnend an einem ersten Ende des Registers nach einem Byte-Wert zu suchen und Byte für Byte nach dem Byte-Wert zu suchen, bis das zweite Ende des Registers erreicht ist, und wobei die Suchlogik konfiguriert ist, im Big-Endian-Modus beginnend an dem zweiten Ende des Registers nach einem Byte-Wert zu suchen und Byte für Byte nach dem Byte-Wert zu suchen, bis das erste Ende des Registers erreicht ist.

12. Verfahren zur Verwendung auf einem Prozessorsystem (50), wobei das Verfahren **gekennzeichnet ist durch** das Empfangen, an einer Lade-/Speichereinheit (LSU, 66), einer einzelnen Ladeanweisung, die die LSU veranlasst, Daten aus einem Speicher in ein erstes Quellenregister (205) zu laden, worin die Daten als Datenelemente gespeichert werden, wobei, wenn sich der Prozessor im Little-Endian-Modus befindet, Bytes aus sequenziell zunehmenden Speicheradressen in der Reihenfolge entsprechender, von einem ersten Ende des Quellenregisters zu einem zweiten Ende des Quellenregisters sequenziell zunehmender Byte-Speicheradressen geladen werden, und wobei, wenn sich der Prozessor im Big-Endian-Modus befindet, Bytes aus sequenziell zunehmenden Speicheradressen in der Reihenfolge entsprechender, von dem zweiten Ende des ersten Quellenregisters zu dem ersten Ende des ersten Quellenregisters sequenziell zunehmender Speicheradressen geladen werden.

13. Verfahren nach Anspruch 12, wobei Bytes in dem Register als Datenelemente gespeichert werden, wobei die Größe der Datenelemente eine der Folgenden ist: Byte, Halbwort, Wort, Doppelwort und Quadwort.

14. Verfahren nach Anspruch 13, wobei das Register ein erstes Quellenregister ist, wobei das Verfahren ferner umfasst:
Ausführen, auf einer arithmetisch-logischen Einheit (ALU, 320), einer ALU-Anweisung unter Verwendung von Daten aus dem ersten Quellenregister und einem zweiten Quellenregister, wobei, bei Durchführung einer oder mehrerer Operationen aus der Gruppe: Addition, Subtraktion und Multiplikation, Bits innerhalb einzelner Datenelemente, die aus dem ersten Quellenregister und dem zweiten Quellenregister in die ALU eingegeben werden, nicht umgeordnet werden, unabhängig davon, ob der Prozessor im Big-Endian-Modus oder im Little-Endian-Modus arbeitet.

15. Verfahren nach Anspruch 14, wobei das Verfahren ferner umfasst:
Neuanordnen einer Reihenfolge von Bits aus dem ersten Quellenregister, bevor Daten aus dem ersten Quellenregister in die ALU eingegeben werden, zumindest teilweise basierend darauf, ob der Prozessor im Big-Endian-Modus oder im Little-Endian-Modus arbeitet.

## Revendications

1. Système de processeur (50) comprenant :
un registre (205) et **caractérisé en ce que** :
une unité de stockage de charge (LSU, 66) configurée pour exécuter une instruction de chargement pour charger des données dans le registre à partir d'une mémoire (10), dans laquelle, en mode petit-boutiste, des octets provenant d'adresses mémoire augmentant séquentiellement sont chargés dans l'ordre d'adresses mémoire d'octet augmentant séquentiellement correspondantes d'une première extrémité du registre à une deuxième extrémité du registre, et dans lequel en mode gros-boutiste, des octets provenant d'adresses mémoire augmentant séquentiellement sont chargés dans l'ordre des adresses mémoire augmentant séquentiellement correspondantes à partir de la deuxième extrémité du registre à la première extrémité du registre.

2. Système de processeur selon la revendication 1, dans lequel les octets sont stockés dans le registre comme éléments de données, dans lequel la taille des éléments de données est une parmi : octet, demi-mot, mot, double mot, et quadruple mot.

3. Système de processeur selon la revendication 1 ou 2, dans lequel le registre est un premier registre source et des octets sont stockés dans le premier registre source comme éléments de données et comprenant en outre :
une unité locale arithmétique (ALU, 320) configurée pour exécuter une instruction ALU à l'aide de données du premier registre source et d'un deuxième registre source (220), dans lequel l'exécution d'une ou plusieurs opérations du groupe constitué de : bits d'addition, de soustraction et de multiplication, dans lesquels des éléments de données individuels qui sont entrés dans l'ALU depuis le premier registre source et le deuxième registre source ne sont pas réorganisés indépendamment de si le système fonctionne en mode gros-boutiste ou mode petit-boutiste.

4. Système de processeur selon la revendication 3, dans lequel l'instruction ALU est une instruction d'instruction unique de données multiple (SIMD).

5. Système de processeur selon la revendication 3 ou 4 comprenant en outre :
une logique de réorganisation d'entrée configurée pour réorganiser un ordre d'octets du premier registre source avant que les données du premier registre source ne soient entrées dans l'ALU sur base, au moins en partie, de si le système de processeur fonctionne en mode gros ou petit-boutiste.

6. Système de processeur selon la revendication 4 ou la revendication 5 comme dépendante de la revendication 4, dans lequel l'instruction SIMD fonctionne sur quatre paires de mots d'élément de données, dans lequel les paires de mots d'élément de données sont des mots d'élément de données correspondants à partir des premier et deuxième registres sources.

7. Système de processeur selon la revendication 6, dans lequel les paires d'éléments de données sont traitées en parallèle dans plusieurs ALU.

8. Système de processeur selon l'une quelconque des revendications 2 à 7, dans lequel l'instruction de charge comprend une instruction de charge unique configurée pour amener le LSU à charger des données avec des éléments de données de la mémoire au registre indépendamment d'une taille des éléments de données.

9. Système de processeur selon l'une quelconque des revendications 3 à 7, comprenant en outre :
une logique de réorganisation de sortie configurée pour aligner des octets d'une valeur de sortie calculée par l'ALU sur base, au moins en partie, de si le système de processeur fonctionne en mode gros-boutiste ou en mode petit-boutiste.

10. Système de processeur selon une quelconque revendication précédente, dans lequel le LSU est configuré en outre pour renvoyer des octets stockés dans le registre vers des adresses d'octets de mémoire d'origine à partir desquelles les octets stockés dans le registre ont été chargés.

11. Système de processeur selon l'une quelconque des revendications précédentes, comprenant en outre :
une logique de recherche configurée pour rechercher en mode petit-boutiste une valeur d'octet commençant à la première extrémité du registre et en recherchant octet par octet la valeur d'octet jusqu'à atteindre la deuxième extrémité du registre, et dans laquelle la logique de recherche est configurée pour rechercher en mode gros-boutiste une valeur d'octet commençant à la deuxième extrémité du registre et en recherchant octet par octet la valeur d'octet jusqu'à atteindre la première extrémité du registre.

12. Procédé à utiliser dans un système de processeur (50), le procédé étant **caractérisé par** la réception, dans une unité de stockage de charge (LSU, 66), d'une instruction de chargement unique qui amène le LSU à charger des données dans un premier registre source (205), dans lequel les données sont stockées en tant qu'éléments de données, à partir d'une mémoire, dans laquelle lorsque le processeur est en mode petit-boutiste, des octets d'adresses de mémoire augmentant séquentiellement sont chargées dans l'ordre des adresses de mémoire d'octet augmentant séquentiellement correspondantes d'une première extrémité du premier registre source à une deuxième extrémité du premier registre source, et dans lequel lorsque le processeur est en mode gros-boutiste, des octets provenant d'adresses mémoire croissantes séquentiellement sont chargés dans l'ordre des adresses mémoire croissantes séquentiellement correspondantes de la deuxième extrémité du premier registre source à la première extrémité du premier registre source.

13. Procédé selon la revendication 12, dans lequel les octets sont stockés dans le registre comme éléments de données, dans lequel la taille des éléments de données est l'un parmi des : octet, demi-mot, mot, double mot, et quadruple mot.

14. Procédé selon la revendication 13, dans lequel le registre est un premier registre source, le procédé comprenant en outre :
l'exécution, sur une unité logique arithmétique (ALU, 320), d'une instruction ALU utilisant des données d'un premier registre source et d'un deuxième registre source, dans lequel l'exécution d'une ou plusieurs opérations du groupe de : bits d'addition, de soustraction et de multiplication dans des éléments de données individuels qui sont entrés dans l'ALU à partir du premier registre source et du deuxième registre source ne sont pas réorganisées indépendamment de si le processeur fonctionne en mode gros-boutiste ou en mode petit-boutiste.

15. Procédé selon la revendication 14, dans lequel le procédé comprend en outre :
la réorganisation d'un ordre de bits à partir du premier registre source avant que les données du premier registre source ne soient entrées dans l'ALU sur base, au moins en partie, de si le processeur fonctionne en mode gros-boutiste ou en mode petit-boutiste.
